# EUROPÄISCHE PATENTSCHRIFT

(11) **EP 4 320 378 B1**
(45) Veröffentlichungstag und Bekanntmachung des Hinweises auf die Patenterteilung: **07.05.2025**
(21) Anmeldenummer: 22718945.3
(22) Anmeldetag: 29.03.2022
(51) Int. Cl.: F17C 5/00

(54) **VERFAHREN ZUR KOMMUNIKATION ZWISCHEN EINER BETANKUNGSEINRICHTUNG UND EINEM FAHRZEUG**
METHOD FOR A COMMUNICATION BETWEEN A FUELING DEVICE AND A VEHICLE
PROCÉDÉ DE COMMUNICATION ENTRE UN DISPOSITIF DE RAVITAILLEMENT ET UN VÉHICULE

(30) Priorität: 06.04.2021 DE 102021203386
(43) Veröffentlichungstag der Anmeldung: 14.02.2024
(73) Patentinhaber: Robert Bosch GmbH, 70442 Stuttgart (DE)
(72) Erfinder: WETTE, Philip, 31675 Bueckeburg (DE); KELLER, Thomas, 78628 Rottweil (DE)
(86) Internationale Anmeldenummer: PCT/EP2022/058239
(87) Internationale Veröffentlichungsnummer: WO 2022/214354

(56) Entgegenhaltungen:
- US-A- 5 671 786
- US-A1- 2013 018 504
- US-B2- 9 022 080

## Beschreibung

Die vorliegende Erfindung betrifft ein Verfahren zur Kommunikation zwischen einer Betankungseinrichtung und einem Fahrzeug und ein System zur Kommunikation zwischen einer Betankungseinrichtung und einem Fahrzeug.

### Stand der Technik

Bei der Wasserstoffbetankung von LKW ist gemäß SAE J2799 vorgesehen, einen konstanten, relativ niedrigen Wasserstoffdruck an der Betankungseinrichtung zu verwenden, um Beschädigungen an dem zu befüllenden Tank zu vermeiden. Dazu wird ein aktueller Innendruck des Wassertofftanks vor der Betankung an die Betankungseinrichtung gesandt. Diese Kommunikation kann über eine Infrarotschnittstelle (irDA) stattfinden. Mittels des übertragenen Innendrucks und der von der Betankungseinrichtung ermittelten Außentemperatur wird gemäß SAE J2799 ein sicherer Druckanstieg sowie ein sicherer Zielwert für den Innendruck des Tanks bestimmt. Mit diesen Parametern betankt die Betankungseinrichtung anschließend den Wassertofftank. Durch die Verwendung von irDA ist die Kommunikation zwischen der Betankungseinrichtung und dem Wasserstofftank tendenziell fehleranfällig, da etwa allein der Infrarotanteil des Sonnenlichtes ausreichen könnte, um die Kommunikation zu stören. Kratzer auf einer Sende- und Empfangs-Optik sowie eine Eisbildung um einen Tankrüssel bzw. -stutzen können ebenfalls einen störenden Einfluss haben. In der Folge können keine Parameter ausgetauscht werden und der Betankungsprozess findet nur mit sehr geringem Wasserstoffdruck statt, sodass der Betankungsvorgang langwierig ist.

Zum Optimieren des Betankungsvorgangs, insbesondere zum Verkürzen der Betankungsdauer, sind Verfahren bekannt, bei denen das Fahrzeug und die Betankungsvorrichtung in einer Signalverbindung stehen und dynamisch zu jedem Zeitpunkt einen maximalen, sicheren Wasserstoffdruck zur Betankung einstellen. Hierzu ist eine störungsunanfällige Kommunikationstechnologie erforderlich. Neben der störungsfreien Kommunikation ist insbesondere bei Tankstellen mit mehreren Betankungseinrichtungen und einer höheren Betankungsfrequenz eine eindeutige Zuordnung der Kommunikationspartner eine Herausforderung.

In US 9 022 080 B2 wird vorgeschlagen, das genannte Zuordnungsproblem durch eine Korrelation eines Massenstroms von Wasserstoff in den Tank und ein entsprechendes Ansteigen des Drucks in dem Tank. Dazu ändert die Betankungseinrichtung zu einem bestimmten Zeitpunkt den Massenstrom für kurze Zeit und beobachtet dabei den Druck im Tank, welches über eine Funkverbindung übermittelt wird. Dadurch kann eine Korrelation und folglich eine eindeutige Zuordnung der Funk-Kommunikationspartner erfolgen.

### Offenbarung der Erfindung

Es ist folglich die Aufgabe der Erfindung, eine sichere Kommunikationsverbindung zwischen einer Betankungseinrichtung und einem Fahrzeug zu erreichen, wobei stets eine eindeutige Zuordnung der Kommunikationspartner erfolgt.

Dies wird gelöst durch ein Verfahren mit den Merkmalen des unabhängigen Anspruchs 1. Vorteilhafte Ausführungsformen und Weiterbildungen sind den Unteransprüchen und der nachfolgenden Beschreibung entnehmbar.

Es wird ein Verfahren zur Kommunikation zwischen einer Betankungseinrichtung und einem Fahrzeug vorgeschlagen, aufweisend die Schritte des Koppelns der Betankungseinrichtung und eines Tanks des Fahrzeugs mittels eines Tankrüssels, des Bereitstellens eines mit einem Druck beaufschlagten Kraftstoffs an dem Tankrüssel, des Variierens des Drucks an dem Tankrüssel durch Überlagern eines vorgegebenen Basisdrucks mit einer Drucksequenz zum Aufmodulieren eines zu übertragenden ersten Signals, und des Erfassens des an dem Tankrüssel anliegenden Drucks durch das Fahrzeug und Extrahieren des zu übertragenden ersten Signals aus dem erfassten Druck.

Ein Kernaspekt der Erfindung besteht darin, dass die Übertragung eines ersten Signals von der Betankungseinrichtung an das Fahrzeug durch Modulieren eines Abgabedrucks erfolgt. Hierdurch können gezielt Daten von der Betankungseinrichtung an das zu betankende Fahrzeug gesandt werden, unabhängig von einer drahtlosen Infrastruktur und unabhängig von einem mitunter fehleranfälligen irDA-Verfahren. Eine Voraussetzung zur Durchführung des Verfahrens liegt in der Möglichkeit, gezielt den Druck an der Betankungseinrichtung in möglichst diskreter Form zu ändern, sodass eine Drucksequenz eindeutig erkennbar aufmoduliert ist und durch Demodulation an dem Fahrzeug zum Erhalten des zugrunde liegenden ersten Signals extrahierbar ist.

Das Koppeln der Betankungseinrichtung und des Tanks erfolgt durch mechanisches Verbinden des Tankrüssels mit einem Tankstutzen an dem Fahrzeug. Die Aufnahme des Betankungsvorgangs kann direkt nach dem Kopplungsvorgang erfolgen. An das Koppeln könnte sich hierzu beispielsweise das Betätigen eines Aktivierungsschalters anschließen, durch den der Betankungsvorgang initiiert wird.

Die Betankungseinrichtung ist dazu ausgebildet, den Kraftstoff druckbeaufschlagt an dem Tankrüssel bereitzustellen. Hierzu kann die Betankungseinrichtung eine Pumpe aufweisen, mit der der Kraftstoff von einem Reservoir an den Tankrüssel geleitet wird. Es kommen unterschiedliche Varianten für die Pumpe in Betracht und die Erfindung ist nicht auf eine bestimmte Bauart der Pumpe beschränkt, sondern alle geeigneten Pumpen und Pumpen aufweisende Anordnungen sind explizit umfasst.

Zum Ändern des Drucks an dem Tankrüssel ist vorstellbar, dass die vorangehend genannte Pumpe den Basisdruck bereitstellt. Die Pumpe könnte mit einer Ventilanordnung gekoppelt sein, die stromabwärts der Pumpe angeordnet ist. Die Ventilanordnung könnte ein Druckminderventil bzw. eine Druckregelventilanordnung umfassen. Es ist vorstellbar, dass durch eine Umschaltung mindestens eines Ventils eine rasche Druckänderung an dem Tankrüssel erreicht wird. Allerdings könnte auch die Pumpe dazu ausgebildet sein, rasche Druckänderungen direkt durchzuführen. Die Drucksequenz, die auf den Basisdruck aufmoduliert wird, muss nicht zwangsläufig einen zusätzlichen Druck umfassen, sondern könnte auch in Form einer selektiven Druckreduktion realisiert werden.

Das Fahrzeug, in dem der zu befüllende Tank angeordnet ist, weist zumindest einen Tankdrucksensor auf, der dazu ausgebildet ist, einen Druck im Inneren des Tanks zu erfassen. Dieser hängt auch von dem Druck an dem Tankrüssel ab. Ändert sich der Druck des Kraftstoffs in dem Tankrüssel, kann dieser folglich auch durch den Tankdrucksensor erfasst werden. Das Fahrzeug könnte eine Steuereinheit aufweisen, die mit dem Tankdrucksensor verbunden ist. Die erfassten Innendrücke könnten dann kontinuierlich in der Steuereinheit zumindest temporär aufgezeichnet werden. Hierdurch ergibt sich eine Innendruckkurve bzw. ein Innendruckverlauf über die Zeit. Durch Filtern kann, je nach verwendeten Modulationsverfahren, die Drucksequenz aus dem aufgezeichneten Druckverlauf extrahiert werden. Damit kann eine zumindest unidirektionale Übertragung eines ersten Signals von der Betankungseinrichtungen an das Fahrzeug erfolgen.

Eine Modulation könnte etwa mittels Pulsweitenmodulation (PWM) erfolgen, wobei selbstverständlich auch andere, bereits aus anderen Bereichen bekannte Modulationstechniken denkbar sind. Dabei muss der Basisdruck im System nicht über die Zeit stabil gehalten werden, sondern könnte auch steigen oder fallen.

Es ist weiterhin vorstellbar, dass das Fahrzeug dazu ausgebildet ist, einen Druck auch dann an dem Tankstutzen zu erfassen, wenn kein Kraftstoff fließt. Damit kann etwa vor Öffnen eines Tankventils an dem Tankstutzen dennoch bereits ein erstes Signal durch das Fahrzeug erfasst werden.

Diese Art der Kommunikation beseitigt die Fehleranfälligkeit insbesondere von irDA gegenüber äußeren Einflüssen und nutzt darüber hinaus nur Hardwarekomponenten, die sich bereits in Tanks und Pumpen befinden. Darüber hinaus hat das Verfahren auch signifikante Vorteile gegenüber Funktechnologien, die alternativ zu irDA genutzt werden, da bei der Kommunikation über das erfindungsgemäße Verfahren das vorangehend dargestellte Zuordnungsproblem nicht auftritt. Es wäre denkbar, das erfindungsgemäße Verfahren auch zur Zuordnung von Kommunikationspartnern gelöst werden, um anschließend eine Funkverbindung der identifizierten Kommunikationspartner zu nutzen.

In einer vorteilhaften Ausführungsform weist das Fahrzeug ferner das Variieren eines von dem Fahrzeug abgenommenen Massenstroms durch das Fahrzeug durch Überlagern eines vorgegebenen Basismassenstroms mit einer Massenstromsequenz zum Aufmodulieren eines zu übertragenden zweiten Signals, und das Erfassen des an durch den Tankrüssel strömenden Massenstroms durch die Betankungseinrichtung und Extrahieren des zu übertragenden zweiten Signals aus dem erfassten Massenstrom auf. Analog zu dem vorangehend dargestellten Konzept des Übertragens eines ersten Signals von der Betankungseinrichtung an das Fahrzeug kann durch Beeinflussen des Massenstroms auch ein zweites Signal von dem Fahrzeug an die Betankungseinrichtung übertragen werden. Damit erlaubt das Verfahren eine bidirektionale Kommunikation zwischen der Betankungseinrichtung und dem Fahrzeug. Zur Beeinflussung des Massenstroms könnte fahrzeugseitig ein Tankventil oder eine Tankventilanordnung vorgesehen sein. Zum Erfassen des Massenstroms kann die Betankungseinrichtung einen Massenstromsensor aufweisen, der mit einer Steuereinheit koppelbar ist. Die erfassten Massenströme könnten dann kontinuierlich in der Steuereinheit zumindest temporär aufgezeichnet werden. Hierdurch ergibt sich eine Massenstromkurve bzw. ein Massenstromverlauf über die Zeit. Durch Filtern kann die Massenstromsequenz aus dem aufgezeichneten Massenstromverlauf extrahiert werden. Der Massenstrom muss hierbei ebenso wie der Druck nicht konstant sein, sondern kann über die Zeit steigen oder fallen.

In einer weiter vorteilhaften Ausführungsform umfasst das Verfahren ferner das Austauschen von Identifikationsmerkmalen der Betankungseinrichtung und des Fahrzeugs oder eines kryptografischen Schlüssels, und das Aufbauen einer Funkverbindung der Betankungseinrichtung und des Fahrzeugs unter Verwendung der Identifikationsmerkmale oder des kryptografischen Schlüssels. Das erfindungsgemäße Verfahren wird demnach in dieser Ausführungsform primär zur Initiierung einer sicheren und eindeutigen Funkverbindung genutzt. Das Verfahren erlaubt eine sehr zuverlässige Zuordnung der Kommunikationspartner für die Funkverbindung.

In einer vorteilhaften Ausführungsform des Verfahrens steigt der Basisdruck mit der Zeit an oder fällt ab. Bei einer Regelung der Betankung kann der Basisdruck während der Betankung angepasst werden, je nach Außentemperatur und/oder Tankdruck.

Die Drucksequenz könnte weiterhin auf einem Rechteck-, Sinus- oder Sägezahnsignal basieren, wobei eine Amplitude des Rechteck-, Sinus- oder Sägezahnsignals den Basisdruck unterschreitet. Die Drucksequenz könnte auch geringfügig von dem Rechteck, Sinus- oder Sägezahnsignal abweichen, da die Druckänderung zwar mit einem solchen Signal initiiert wird, jedoch abhängig von der Ausführung der Pumpe oder einer damit verbundenen Ventilanordnung erfolgt eine Druckänderung nicht unmittelbar, sondern mit einer gewissen Trägheit. Dies ist durch den Begriff "basiert" berücksichtigt. Neben einer Amplitudenmodulation kann auch eine Frequenzmodulation in Betracht kommen.

Das Verfahren kann ferner das Initiieren eines Betankungsvorgangs mit einem vorbestimmten sicheren Minimaldruck als Basisdruck aufweisen, wonach das Variieren des Drucks erfolgt. Der sichere Minimaldruck könnte so gewählt werden, dass sämtliche denkbaren Tanks, die durch die Betankungseinrichtung betankt werden, mit einem solchen sicheren Druck betankt werden, bei dem eine Beschädigung des Tanks ausgeschlossen ist.

Besonders bevorzugt weist das Verfahren ferner eine Regelung des Drucks an der Betankungseinrichtung zur beschleunigten Betankung basierend auf einer mittels des zweiten Signals übertragenen Druckanforderung durch das Fahrzeug auf. Vor, während und/oder nach einem Betankungsvorgang könnten dadurch etwa der momentane Tankdruck, ein gewünschter Druck am Tankrüssel oder andere Parameter übertragen werden.

Die Erfindung betrifft analog dazu ein System zur Kommunikation zwischen einer Betankungseinrichtung und einem Fahrzeug, wobei die Betankungseinrichtung einen Tankrüssel aufweist, der mit einem Tank des Fahrzeugs koppelbar ist, wobei die Betankungseinrichtung dazu ausgebildet ist, einen mit einem variablen Druck beaufschlagten Kraftstoff durch den Tankrüssel bereitzustellen, wobei die Betankungseinrichtung eine erste Steuereinheit aufweist, die dazu ausgebildet ist, ein Variieren des Drucks an dem Tankrüssel durch Überlagern eines vorgegebenen Basisdrucks mit einer Drucksequenz zum Aufmodulieren eines zu übertragenden ersten Signals zu veranlassen, wobei das Fahrzeug eine zweite Steuereinheit aufweist, die dazu ausgebildet ist, den an dem Tankrüssel anliegenden Druck über einen Tankdrucksensor zu erfassen und das zu übertragende ersten Signal aus dem erfassten Druck zu extrahieren.

In einer vorteilhaften Ausführungsform ist die zweite Steuereinheit dazu ausgebildet, mittels eines Tankventils einen Massenstrom durch Überlagern eines vorgegebenen Basismassenstroms mit einer Massenstromsequenz zum Aufmodulieren eines zu übertragenden zweiten Signals zu variieren, und wobei die erste Steuereinheit dazu ausgebildet ist, über einen Massenstromsensor den durch den Tankrüssel strömenden Massenstrom zu erfassen und das zu übertragende zweiten Signal aus dem erfassten Massenstrom zu extrahieren.

Besonders bevorzugt ist die Betankungseinrichtung eine Wasserstoff-Betankungseinrichtung.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 eine Betankungseinrichtung und ein Fahrzeug, die ein System zur Kommunikation bilden.
Figur 2 einen Druckverlauf an dem Tankrüssel.
Figur 3 eine Tankstelle.
Figur 4 eine schematische Darstellung des erfindungsgemäßen Verfahrens.

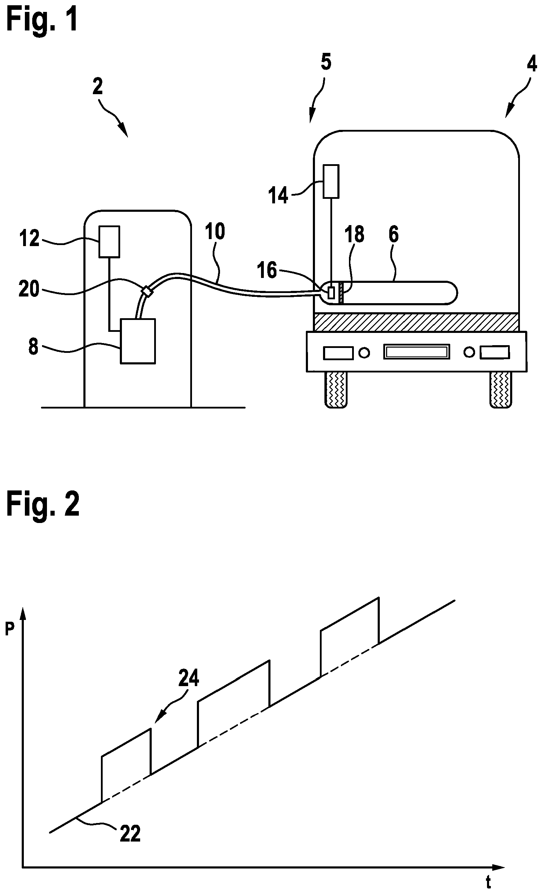

Fig. 1 zeigt eine Betankungseinrichtung 2 und ein Fahrzeug 4, das einen Tank 6 aufweist, der durch die Betankungseinrichtung 2 zu befüllen ist. In diesem Ausführungsbeispiel ist der Tank 6 ein Wasserstofftank und die Betankungseinrichtung 2 eine Wasserstoff-Betankungseinrichtung. Die Betankungseinrichtung 2 weist eine Pumpe 8 auf, die mit einem nicht dargestellten Wasserstoffreservoir verbunden ist. Über einen Tankrüssel 10 kann die Betankungseinrichtung 2 Wasserstoff an den Tank 6 liefern.

Die Betankungseinrichtung 2 weist eine erste Steuereinheit 12 auf, die mit der Pumpe 8 gekoppelt ist. Damit ist die Betankungseinrichtung 2 dazu ausgebildet, den Wasserstoff mit einem variablen Druck in dem Tankrüssel 10 bereitzustellen. Die erste Steuereinheit 12 ist dazu ausgebildet, ein Variieren des Drucks an dem Tankrüssel 10 durch Überlagern eines vorgegebenen Basisdrucks mit einer Drucksequenz zum Aufmodulieren eines zu übertragenden ersten Signals zu veranlassen.

Das Fahrzeug 4 weist eine zweite Steuereinheit 14 auf, die mit einem Tankdrucksensor 16 verbunden ist. Die zweite Steuereinheit 14 ist dazu ausgebildet, den an dem Tankrüssel 10 anliegenden Druck zu erfassen und das zu übertragende ersten Signal aus dem erfassten Druck zu extrahieren.

Das Fahrzeug 4 kann weiterhin ein Tankventil 18 aufweisen, das mit der zweiten Steuereinheit 14 gekoppelt ist und dazu ausgebildet ist, einen in den Tank 6 eintretenden Massenstrom zu regulieren. Die zweite Steuereinheit 14 ist beispielhaft dazu ausgebildet, mittels des Tankventils 18 den Massenstrom durch Überlagern eines vorgegebenen Basismassenstroms mit einer Massenstromsequenz zum Aufmodulieren eines zu übertragenden zweiten Signals zu variieren. Die erste Steuereinheit 12 ist mit einem Massenstromsensor 20 gekoppelt, der dazu ausgebildet ist, den durch den Tankrüssel 10 abfließenden Massenstrom zu erfassen. Die erste Steuereinheit 12 kann folglich über den Massenstromsensor 20 den Massenstrom erfassen und hieraus das zu übertragende zweiten Signal aus dem erfassten Massenstrom extrahieren. Folglich können die Betankungseinrichtung 2 und das Fahrzeug 4durch gezieltes Ändern von Betankungsmerkmalen über den Wasserstoff kommunizieren.

Fig. 2 zeigt beispielhaft eine Druckkurve, die von der Betankungseinrichtung 2 zum Übertragen des ersten Signals erzeugbar ist. Hier ist ein Basisdruck 22 gezeigt, der im Verlauf der Zeit kontinuierlich steigt. Er könnte indes auch einen anderen Verlauf haben und beispielsweise konstant, bereichsweise ansteigend und/oder abfallend und/oder konstant sein. Auf den Basisdruck 22 wird eine Drucksequenz 24 in Form eines Rechtecksignals überlagert. Dies bedeutet, dass in mehreren Intervallen der Druck an der Pumpe 8 selektiv erhöht wird, sodass der in Fig. 2 gezeigte Druckverlauf entsteht. Dies ist auf dieselbe Weise mit dem Massenstrom denkbar, der durch das Fahrzeug 4 beeinflusst wird, um ein zweites Signal an die Betankungseinrichtung zu übertragen.

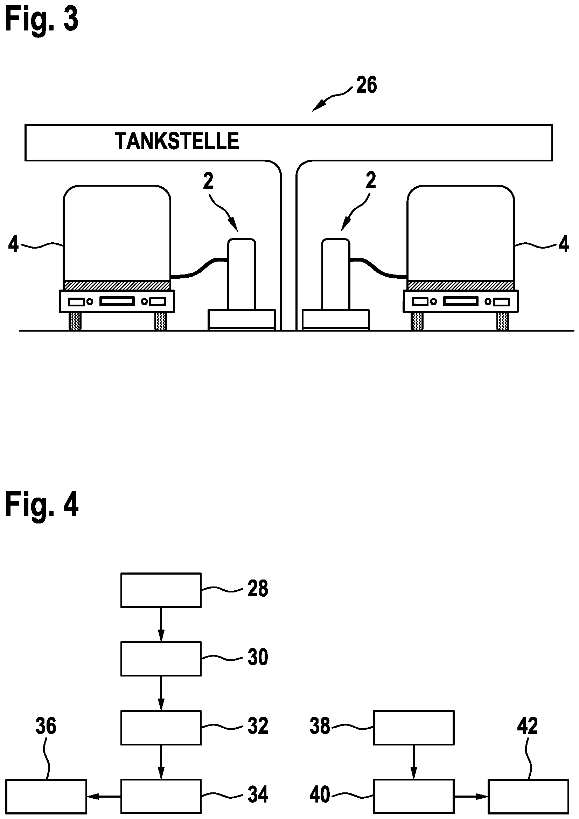

Fig. 3 zeigt eine Tankstelle 26 mit mehreren Betankungseinrichtungen 2. Hier sind zwei Fahrzeuge 4 jeweils mit einer der Betankungseinrichtungen 2 über einen Tankrüssel 10 gekoppelt. Durch Übertragen erster und gegebenenfalls zweiter Signale können die Fahrzeuge 4 von den Betankungseinrichtungen 2 kryptografische Schlüssel oder Identifikationsmerkmale erhalten, durch die sie eine drahtlose Funkverbindung mit eindeutiger Zuordnung der Kommunikationspartner aufbauen können. Dies ist für derartige Tankstellen 26 mit einander benachbarten Betankungseinrichtungen 2 sinnvoll, da sich mehrere Fahrzeuge 4 jeweils in einer Funkreichweite der Betankungseinrichtungen 2 befinden können und eine eindeutige Zuordnung zur sicheren Kommunikation erfordern.

Fig. 4 zeigt eine schematische Blockansicht des erfindungsgemäßen Verfahrens. Das Verfahren weist die Schritte des Koppelns 28 der Betankungseinrichtung 2 und des Tanks 6 des Fahrzeugs 4 mittels eines Tankrüssels 10, des Bereitstellens 30 eines mit einem Druck beaufschlagten Kraftstoffs an dem Tankrüssel 10, des Variierens 32 des Drucks an dem Tankrüssel 10 durch Überlagern eines vorgegebenen Basisdrucks 22 mit einer Drucksequenz 24 zum Aufmodulieren eines zu übertragenden ersten Signals, und des Erfassens 34 des an dem Tankrüssel anliegenden Drucks durch das Fahrzeug 4 und Extrahieren 36 des zu übertragenden ersten Signals aus dem erfassten Druck auf.

Das Verfahren kann, wie vorangehend dargelegt, außerdem das Variieren 38 eines von dem Fahrzeug 4 abgenommenen Massenstroms durch das Fahrzeug 4 durch Überlagern eines vorgegebenen Basismassenstroms mit einer Massenstromsequenz zum Aufmodulieren eines zu übertragenden zweiten Signals, und das Erfassen 40 des durch den Tankrüssel 10 strömenden Massenstroms durch die Betankungseinrichtung 2 und das Extrahieren 42 des zu übertragenden zweiten Signals aus dem erfassten Massenstrom aufweisen.

## Patentansprüche

1. Verfahren zur Kommunikation zwischen einer Betankungseinrichtung (2) und einem Fahrzeug (4), aufweisend die Schritte:
- Koppeln (28) der Betankungseinrichtung (2) und eines Tanks (6) des Fahrzeugs (4) mittels eines Tankrüssels (10),
- Bereitstellen (30) eines mit einem Druck beaufschlagten Kraftstoffs an dem Tankrüssel (10),
- Variieren (32) des Drucks an dem Tankrüssel (10) durch Überlagern eines vorgegebenen Basisdrucks (22) mit einer Drucksequenz zum Aufmodulieren eines zu übertragenden ersten Signals, und
- Erfassen (34) des an dem Tankrüssel (10) anliegenden Drucks durch das Fahrzeug (4) und Extrahieren (36) des zu übertragenden ersten Signals aus dem erfassten Druck.

2. Verfahren nach Anspruch 1, ferner aufweisend:
- Variieren (38) eines von dem Fahrzeug (4) abgenommenen Massenstroms durch das Fahrzeug (4) durch Überlagern eines vorgegebenen Basismassenstroms mit einer Massenstromsequenz zum Aufmodulieren eines zu übertragenden zweiten Signals, und
- Erfassen (40) des durch den Tankrüssel (10) strömenden Massenstroms durch die Betankungseinrichtung (2) und Extrahieren des zu übertragenden zweiten Signals aus dem erfassten Massenstrom.

3. Verfahren nach Anspruch 1 oder 2, ferner aufweisend
- Austauschen von Identifikationsmerkmalen der Betankungseinrichtung (2) und des Fahrzeugs (4) oder eines kryptografischen Schlüssels, und
- Aufbauen einer Funkverbindung der Betankungseinrichtung (2) und des Fahrzeugs (4) unter Verwendung der Identifikationsmerkmale oder des kryptografischen Schlüssels.

4. Verfahren nach einem der vorhergehenden Ansprüche,
wobei der Basisdruck (22) mit der Zeit ansteigt oder abfällt.

5. Verfahren nach einem der vorhergehenden Ansprüche,
wobei die Drucksequenz (24) auf einem Rechteck-, Sinus- oder Sägezahnsignal basiert, wobei eine Amplitude des Rechteck-, Sinus- oder Sägezahnsignals den Basisdruck (22) unterschreitet.

6. Verfahren nach einem der vorhergehenden Ansprüche, ferner aufweisend das Initiieren eines Betankungsvorgangs mit einem vorbestimmten sicheren Minimaldruck als Basisdruck (22), wonach das Variieren (32) des Drucks erfolgt.

7. Verfahren nach Anspruch 2, ferner aufweisend eine Regelung des Drucks an der Betankungseinrichtung (2) zur beschleunigten Betankung basierend auf einer mittels des zweiten Signals übertragenen Druckanforderung durch das Fahrzeug (4).

8. System (5) zur Kommunikation zwischen einer Betankungseinrichtung (2) und einem Fahrzeug (4), wobei die Betankungseinrichtung (2) einen Tankrüssel aufweist, der mit einem Tank (6) des Fahrzeugs (4) koppelbar ist, wobei die Betankungseinrichtung (2) dazu ausgebildet ist, einen mit einem variablen Druck beaufschlagten Kraftstoff durch den Tankrüssel (10) bereitzustellen, wobei die Betankungseinrichtung (2) eine erste Steuereinheit (12) aufweist, die dazu ausgebildet ist, ein Variieren (32) des Drucks an dem Tankrüssel (10) durch Überlagern eines vorgegebenen Basisdrucks (22) mit einer Drucksequenz (24) zum Aufmodulieren eines zu übertragenden ersten Signals zu veranlassen, wobei das Fahrzeug (4) eine zweite Steuereinheit (14) aufweist, die dazu ausgebildet ist, den an dem Tankrüssel (10) anliegenden Druck über einen Tankdrucksensor (16) zu erfassen und das zu übertragende ersten Signal aus dem erfassten Druck zu extrahieren.

9. System (5) nach Anspruch 8, wobei die zweite Steuereinheit (14) dazu ausgebildet ist, mittels eines Tankventils (18) einen Massenstrom durch Überlagern eines vorgegebenen Basismassenstroms mit einer Massenstromsequenz zum Aufmodulieren eines zu übertragenden zweiten Signals zu variieren, und wobei die erste Steuereinheit (12) dazu ausgebildet ist, über einen Massenstromsensor (20) den durch den Tankrüssel (10) strömenden Massenstrom zu erfassen und das zu übertragende zweiten Signal aus dem erfassten Massenstrom zu extrahieren.

10. System (5) nach Anspruch 8 oder 9, wobei die Betankungseinrichtung (2) eine Wasserstoff-Betankungseinrichtung ist.

## Claims

1. Method for communication between a fuelling device (2) and a vehicle (4), comprising the steps of:
- coupling (28) the fuelling device (2) and a tank (6) of the vehicle (4) by means of a fuel nozzle (10),
- providing (30) a pressurized fuel at the fuel nozzle (10),
- varying (32) the pressure at the fuel nozzle (10) by superimposing a pressure sequence onto a specified base pressure (22) in order to modulate onto it a first signal to be transmitted, and
- detecting (34) the pressure present at the fuel nozzle (10) by means of the vehicle (4) and extracting (36) the first signal to be transmitted from the detected pressure.

2. Method according to Claim 1, also comprising:
- varying (38) a mass flow through the vehicle (4) taken from the vehicle (4) by superimposing a mass flow sequence onto a specified base mass flow in order to modulate onto it a second signal to be transmitted, and
- detecting (40) the mass flow flowing through the fuel nozzle (10) by means of the fuelling device (2) and extracting the second signal to be transmitted from the detected mass flow.

3. Method according to Claim 1 or 2, also comprising
- exchanging identification features of the fuelling device (2) and the vehicle (4) or a cryptographic key, and
- establishing a radio link between the fuelling device (2) and the vehicle (4) using the identification features or the cryptographic key.

4. Method according to one of the preceding claims,
wherein the base pressure (22) rises or falls over time.

5. Method according to one of the preceding claims,
wherein the pressure sequence (24) is based on a rectangular, sinusoidal, or sawtooth signal, wherein an amplitude of the rectangular, sinusoidal, or sawtooth signal falls below the base pressure (22).

6. Method according to one of the preceding claims, also comprising initiating a fuelling operation at a predetermined secure minimum pressure as the base pressure (22), after which the varying (32) of the pressure occurs.

7. Method according to Claim 2, also comprising regulating the pressure at the fuelling device (2) for accelerated fuelling based on a pressure request by the vehicle (4) transmitted by means of the second signal.

8. System (5) for communication between a fuelling device (2) and a vehicle (4), wherein the fuelling device (2) comprises a fuel nozzle which can be coupled to a tank (6) of the vehicle (4), wherein the fuelling device (2) is designed to provide a fuel that has been subjected to a variable pressure through the fuel nozzle (10), wherein the fuelling device (2) comprises a first control unit (12), which is designed to cause varying (32) of the pressure at the fuel nozzle (10) by superimposing a pressure sequence (24) onto a specified base pressure (22) in order to modulate onto it a first signal to be transmitted, wherein the vehicle (4) comprises a second control unit (14), which is designed to detect by way of a tank pressure sensor (16) the pressure present at the fuel nozzle (10) and to extract the first signal to be transmitted from the detected pressure.

9. System (5) according to Claim 8, wherein the second control unit (14) is designed to vary, by means of a tank valve (18), a mass flow by superimposing a mass flow sequence onto a specified base mass flow in order to modulate onto it a second signal to be transmitted, and wherein the first control unit (12) is designed to detect by way of a mass flow sensor (20) the mass flow flowing through the fuel nozzle (10) and to extract the second signal to be transmitted from the detected mass flow.

10. System (5) according to Claim 8 or 9, wherein the fuelling device (2) is a hydrogen fuelling device.

## Revendications

1. Procédé de communication entre un dispositif de ravitaillement (2) et un véhicule (4), comprenant les étapes suivantes :
- relier (28) le dispositif de ravitaillement (2) et un réservoir (6) du véhicule (4) au moyen d'une trompe (10) de réservoir,
- fournir (30) un carburant sous pression au niveau de la trompe (10) de réservoir,
- faire varier (32) la pression au niveau de la trompe (10) de réservoir en superposant une pression de base prédéterminée (22) à une séquence de pression pour moduler un premier signal à transmettre, et
- détecter (34), par le véhicule (4), la pression appliquée sur la trompe (10) de réservoir et, à partir de la pression détectée, extraire (36) le premier signal à transmettre.

2. Procédé selon la revendication 1, comprenant en outre :
- le fait (38), par le véhicule (4), de faire varier un débit massique prélevé sur le véhicule (4) en superposant à un débit massique de base prédéterminé une séquence de débit massique pour moduler un deuxième signal à transmettre, et
- le fait (40), par le dispositif de ravitaillement (2), de détecter le débit massique traversant la trompe (10) de réservoir et le fait, à partir du débit massique détecté, d'extraire le deuxième signal à transmettre.

3. Procédé selon la revendication 1 ou la revendication 2, comprenant en outre
- le fait d'échanger des caractéristiques d'identification du dispositif de ravitaillement (2) et du véhicule (4) ou une clé cryptographique, et
- le fait d'établir une liaison radio entre le dispositif de ravitaillement (2) et le véhicule (4) en utilisant les caractéristiques d'identification ou la clé cryptographique.

4. Procédé selon l'une des revendications précédentes,
dans lequel la pression de base (22) augmente ou diminue avec le temps.

5. Procédé selon l'une des revendications précédentes,
dans lequel la séquence de pression (24) est basée sur un signal rectangulaire, sinusoïdal ou en dents de scie, une amplitude du signal rectangulaire, sinusoïdal ou en dents de scie étant inférieure à la pression de base (22).

6. Procédé selon l'une des revendications précédentes, comprenant en outre le fait d'initier une opération de ravitaillement avec une pression minimale de sécurité prédéterminée comme pression de base (22), après quoi la variation (32) de la pression a lieu.

7. Procédé selon la revendication 2, comprenant en outre une régulation de la pression au niveau du dispositif de ravitaillement (2) pour un ravitaillement accéléré en fonction d'une demande de pression par le véhicule (4) transmise au moyen du deuxième signal.

8. Système (5) de communication entre un dispositif de ravitaillement (2) et un véhicule (4), le dispositif de ravitaillement (2) comprenant une trompe de réservoir apte à être reliée à un réservoir (6) du véhicule (4), le dispositif de ravitaillement (2) étant conçu pour fournir un carburant à pression variable par l'intermédiaire de la trompe (10) de réservoir, le dispositif de ravitaillement (2) comprenant une première unité de commande (12) conçue de façon à provoquer une variation (32) de la pression au niveau de la trompe (10) de réservoir en superposant une pression de base prédéterminée (22) à une séquence de pression (24) afin de moduler un premier signal à transmettre, le véhicule (4) comportant une deuxième unité de commande (14) qui est conçue pour détecter, au moyen d'un capteur de pression de réservoir (16), la pression appliquée à la trompe (10) de réservoir et, à partir de la pression détectée, pour extraire le premier signal à transmettre.

9. Système (5) selon la revendication 8, dans lequel la deuxième unité de commande (14) est conçue de façon à faire varier un débit massique au moyen d'une vanne de réservoir (18) en superposant un débit massique de base prédéfini à une séquence de débit massique afin de moduler un deuxième signal à transmettre, et dans lequel la première unité de commande (12) est conçue pour détecter le débit massique s'écoulant à travers la trompe (10) de réservoir via un capteur de débit massique (20) et pour extraire, à partir du débit massique détecté, le deuxième signal à transmettre.

10. Système (5) selon la revendication 8 ou la revendication 9, dans lequel le dispositif de ravitaillement (2) est un dispositif de ravitaillement en hydrogène.
